# EUROPÄISCHE PATENTANMELDUNG

(11) **EP 0 901 748 A1**
(43) Veröffentlichungstag der Anmeldung: **17.03.1999**
(21) Anmeldenummer: 98113758.1
(22) Anmeldetag: 23.07.1998
(51) Int. Cl.: A01C 17/00, A01C 15/00

(54) **Verfahren zum Einsatz eines Zentrifugalstreuers**

(30) Priorität: 16.08.1997 DE 19735525
(71) Anmelder: Amazonen-Werke H. Dreyer GmbH & Co. KG, D-49205 Hasbergen (DE)
(72) Erfinder: Dreyer, Heinz, Dipl.-Ing. Dr., 49205 Hasbergen (DE)

(57) **Zusammenfassung**

Verfahren zum Einsatz eines Zentrifugalstreuers mit zumindest zwei Vorratsbehältern (1,2) zum Ausbringen von zumindest zwei verschiedenen Materialsorten über die gleiche Arbeitsbreite, wobei jedem Vorratsbehälter zumindest ein Dosierorgan (23) und ein zumindest eine rotierend angetriebene Schleuderscheibe aufweisendes Streuwerk (18,18') zugeordnet ist. Zur Durchführung der sogenannten Vorerntesaat wird in den einen Vorratsbehälter (1) Saatgut und in den anderen Vorratsbehälter (2) Schneckenkorn eingefüllt. Von dem einen Streuwerk (18) wird das Saatgut und von dem anderen Streuwerk (18') das Schneckenkorn verteilt.

## Beschreibung

Die Erfindung betrifft ein Verfahren zum Einsatz eines Zentrifugalstreuers gemäß des Oberbegriffes des Anspruches 1.

Ein derartiges Verfahren ist beispielsweise in der DE-OS 41 02 783 beschrieben. Gemäß den Ausführungen in dieser Druckschrift können mit diesem Zentrifugaldüngerstreuer wahlweise eine Düngersorte und zwei oder drei verschiedene Düngersorten ausgebracht werden.

In der Praxis wird in jüngster Zeit vielfach die Vorerntesaat durchgeführt. Diese sogenannte Vorerntesaat von Raps erfolgt in den noch stehenden Getreidebestand vor dem Mähdrusch. Hierbei eignet sich Winterraps wegen seines Keimverhaltens und seiner Bestandesentwicklung besonders gut. Darüber hinaus eignet sich die Vorerntesaat in den Gebieten mit später Getreideernte, hohen Niederschlägen im August und auf schweren Böden. Die Vorerntesaat erfolgt hierbei mit einem pneumatischen Düngerstreuer. Hierbei wird vor dem Ausbringen das Rapssaatgut mit Schneckenkorn vermischt, um zu verhindern, daß der Schneckenbesatz im Getreidebestand den Bestand an frischgekeimten Rapspflanzen vollständig vernichten kann. Es hat sich nun jedoch gezeigt, daß das Rapssaatgut-Schneckenkorngemisch sich während des Ausbringens im Vorratsbehälter zumindest teilweise entmischt.

Bei diesem bekannten Verfahren ist das vorhergehende Mischen von Saatgut und Schneckenkorn zusätzlich aufwendig. Darüber hinaus besteht, wie vorerwähnt, die Gefahr des Entmischens. Darüber hinaus ist der Einsatz der pneumatischen Düngerstreuer relativ kostenintensiv.

Der Erfindung liegt die Aufgabe zugrunde, ein preiswertes Verfahren zur Durchführung der sogenannten Vorerntesaat vorzuschlagen, wobei eine gleichmäßige Ausbringung von Saatgut und Schneckenkorn gewährleistet ist.

Diese Aufgabe wird erfindungsgemäß durch die kennzeichnenden Merkmale des Patentanspruches 1 gelöst. Infolge dieser Maßnahmen wird mit dem einen Streuwerk das Saatgut und mit dem anderen Streuwerk das Schneckenkorn verteilt, so daß die ein unterschiedliches Flugverhalten aufweisenden auszubringenden Materialien in optimaler Weise von dem jeweiligen Streuwerk verteilt werden.

Hierzu ist vorgesehen, daß das den Raps verteilende Streuwerk mit einer derartigen Geschwindigkeit angetrieben wird, daß es an seinen Abwurfenden eine größere Umfangsgeschwindigkeit als das das Schneckenkorn verteilende Streuwerk aufweist. Diese unterschiedlichen Umfangsgeschwindigkeiten können dadurch verwirklicht werden, daß unterschiedlich lange Wurfschaufeln für das jeweilige Streuwerk verwendet werden. Auch ist es möglich, die verschiedenen Streuwerke mit jeweils erforderlicher Drehzahl anzutreiben.

Bei einem Schleuderstreuer, dessen jeweils einem Vorratsbehälter zugeordneten Schleuderscheiben in unterschiedlichen Höhen angeordnet sind, wird das Rapssaatgut von den oberen Scheiben und das Schneckenkorn von den unteren Schleuderscheiben abgeschleudert.

Es ist auch möglich, wenn drei verschiedene Materialsorten ausgebracht werden sollen, einen Schleuderstreuer mit drei hintereinander angeordneten Vorratsbehältern und auf drei unterschiedlichen Ebenen angeordneten Schleuderscheiben bzw. Streuwerken vorzusehen.

Weitere Einzelheiten der Erfindung sind den übrigen Unteransprüchen, der Beispielsbeschreibung und den Zeichnungen zu entnehmen. Hierbei zeigen
- Fig.1: den Schleuderdüngerstreuer in der Ansicht von hinten und in Prinzipdarstellung und
- Fig.2: den Schleuderdüngerstreuer gemäß Fig.1 in Seitenansicht und in Prinzipdarstellung,

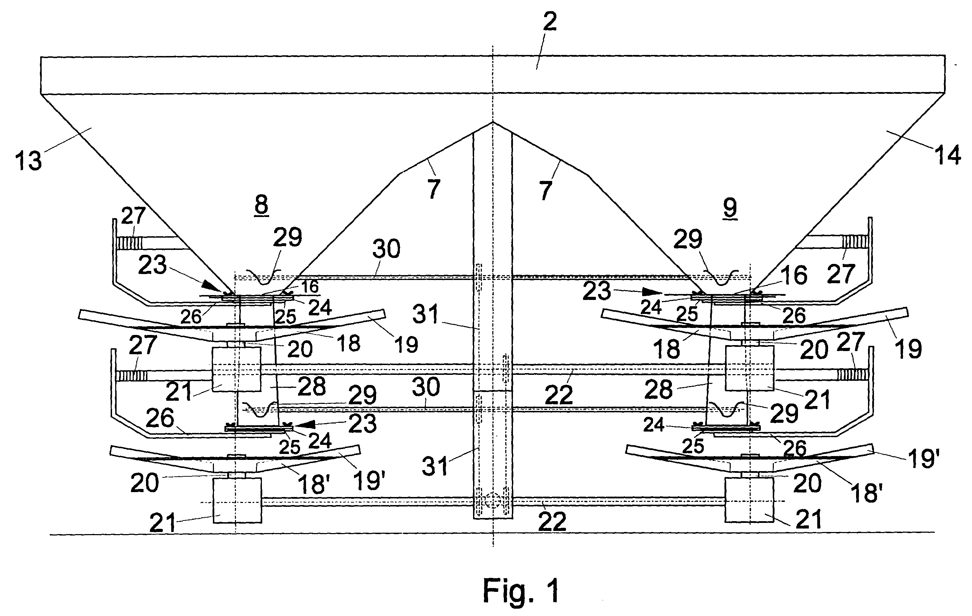

Der Schleuderdüngerstreuer zur Durchführung des Verfahrens weist die beiden hintereinander angeordneten Vorratsbehälter 1 und 2 sowie den Rahmen 3 auf. Der Rahmen 3 ist in Fig.1 aus Gründen der Übersichtlichkeit nicht dargestellt. Die beiden Vorratsbehälter 1 und 2 sind durch die Trennwand 4 voneinander getrennt, die wie mit gestrichelten Linien angedeutet, mittels eines mit durchbrochenen Linien dargestellten Gelenkes 5 schwenkbar zur Variation des Fassungsvermögens angeordnet sein kann. Diese zwischen den beiden Vorratsbehältern 1 und 2 trennende Trennwand 4 kann herausnehmbar, absenkbar oder wegklappbar angeordnet sein.

Die beiden Vorratsbehälter 1 und 2 sind durch das in Fahrtrichtung 6 sich erstreckende dachförmige Mittelteil 7 jeweils im unteren Bereich in die Auslauftrichter 8 bzw. 9 aufgeteilt. Auf der Vorderseite 10 des vorderen Vorratsbehälters 1 ist ein den Schleuderdüngerstreuer tragender Dreipunktanbaurahmen 11, der Teil des Rahmens 3 ist, angeordnet. Aufgrund seiner durchgehenden Ausbildung liegt das dachförmige Mittelteil 7 der beiden Vorratsbehälter 1 und 2 liegt auf gleicher Höhe. Der obere Bereich des dachförmigen Mittelteils 7 ist auf seiner Vorderseite mit dem Dreipunktanbaurahmen 11 im Höhenbereich des oberen Dreipunktanlenkpunktes 12 des Dreipunktanbaurahmens 11 verbunden.

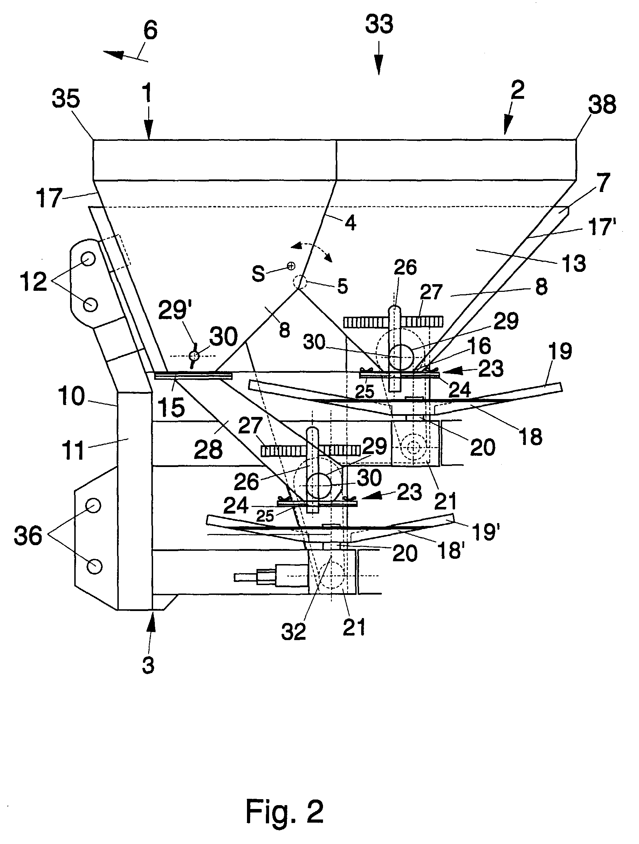

Die äußeren seitlichen Trichterwände 13 und 14 des vorderen Vorratsbehälters 1 und des hinteren Vorratsbehälters 2 fluchten miteinander, wie Fig.1 zeigt. Die unteren Trichterenden 15 und 16 der vorderen und hinteren Vorratsbehälter 1 und 2 liegen auf gleicher Höhe, wie Fig.2 zeigt. Die Vorderwand 17 des vorderen Vorratsbehälters 1 kann steiler als die Rückwand 17' des hinteren Vorratsbehälters 2 angeordnet sein.

Jedem unteren Trichterende 15 und 16 der Vorratsbehälter 1 und 2 ist eine Schleuderscheibe 18 bzw. 18' mit darauf angeordneten Wurfschaufeln 19 bzw. 19' zugeordnet. Die Wurfschaufeln 19 und 19' können in Scheibenebene mit unterschiedlichen Winkeln zur Radialen eingestellt werden, um so durch die unterschiedliche Winkelanstellung der Wurfschaufeln 19 und 19' für unterschiedliche Materialsorten und Arbeitsbreiten eine gleichmäßige Materialverteilung erzielen zu können.

Weiterhin kann vorgesehen sein, daß verschieden ausgebildete Wurfschaufel-oder Schleuderscheibensätze zur Anpassung an verschiedene Arbeitsbreiten- und Streubreitenbereiche zum Einsatz kommen.

Die Schleuderscheiben 18 und 18' sind aus diesem Grunde auswechselbar auf ihren Antriebswellen 20 angeordnet. Die Schleuderscheiben 18 und 18' werden über Winkelgetriebe 21 von der Schlepperzapfwelle und über Getriebezüge 22 angetrieben. Es ist jedoch auch möglich, die Schleuderscheiben 18 und 18' mittels Hydraulikmotoren anzutreiben.

Den Trichterenden 15 und 16 sind Dosierorgane 23 zugeordnet. Den Trichterenden 16 des hinteren Vorratsbehälters 2 sind als Bodenplatten 24 mit Auslauföffnungen, die über Schieber 25 in ihrer Öffnungsweite einzustellen und zu verschließen sind, ausgebildete Dosierorgane zugeordnet. Die Schieber 25 können mittels Einstellelementen verstellt werden. Die Öffnungsweite läßt sich über Anschlagelemente 26, die mit Skalen 27 zusammenwirken, festlegen. Es ist auch möglich, die Schieber 25 mittels elektrischer Einstellelemente elektronisch einzustellen.

Den vorderen Trichterenden 15 ist jeweils ein das Material von den Trichterenden 15 zu den Schleuderscheiben 18' leitendes Leitelement 28 zugeorndet. Dieses Leitelement 28 ist als Zuführschacht mit an dessen unteren Enden angerodnetem Dosierorgan 23 ausgebildet. Der Zuführschacht 28 erweitert sich stätig nach unten. Dieses Dosierorgan 23 weist eine Bodenplatte 24 mit Auslauföffnung auf. Die Auslauföffnung ist über einen Schieber 25 in ihrer Öffnungsweite einstellbar und verschließbar. Die Schieber können mittels Einstellelementen verstellt werden. Die Öffnungsweite läßt sich über Anschlagelemente 26, die mit Skalen 27 zusammenwirken, einstellen. Es ist auch möglich, die Schieber 25 mittels elektronischer Einstellelemente elektrisch einzustellen.

Es ist jedoch auch möglich, das Dosierorgan 23 zwischen den Trichterenden 15 und dem Leitelement 28 anzuordnen. Das Leitelement kann auch als Förderband, etc. ausgebildet sein.

Oberhalb jeder Bodenplatte 24 ist jeweils ein Rührorgan 29 auf einer Rührwelle 30 angeordnet. Auch dem vorderen Trichterende 15 ist eine Rührwelle 30 mit Rührelementen 29' zugeordnet. Die Rührwellen 29 werden über einen Antrieb 31 in bekannter und daher nicht näher erläuterter Weise angetrieben.

Die Drehachsen 32 der unteren Schleuderscheiben 18' befinden sich in Seitansicht gesehen etwa in der Mitte zwischen den unteren Trichterenden 15 und 16 der beiden Vorratsbehälter 1 und 2.

Die vordere obere Kante 35 des Vorratsbehälters 1 sowie die Unter- 36 und Oberlenkeranschlüsse 12 des Dreipunktanbaurahmens 11 verlaufen zumindest annähernd in einer senkrechten Ebene, die durch die vorderen Punkte 37 des größmöglichen Schaufelendenumlaufkreises der unteren Schleuderscheibe 18 verläuft. Die hintere Kante 38 des hinteren Vorratsbehälters 2 liegt bezogen auf die Fahrtrichtung 6 vor dem hintersten Punkt 39 des größtmöglichen Schaufelendenumlaufkreises der Schleuderscheibe 18.

Die das Material auf die unteren Schleuderscheiben 18' leitenden Zulaufschächte 28 enden unterhalb der oberen Schleuderscheiben 18 innerhalb der von den äußeren Teilen dieser Schleuderscheiben 18 beschriebenen Umlaufbahnen. Diese als Materialzuleitungselemente ausgebildeten Zulaufschächte 28 enden in einem geringen Abstand oberhalb der umlaufenden Teile der unteren Schleuderscheibe 28. Der jeweilige Zuleitungsschacht 28 erweitert sich stetig nach unten, um eine Materialverstopfung innerhalb des Zuleitungsschachtes 28 zu vermeiden. Der Zuleitungsschacht 28 ist von den unteren Trichterenden 15 des vorderen Vorratsbehälters 1 schräg nach hinten und unten gerichtet.

Die Rührorgane 29, 29' in den Zuleitungsschächten 28 und in den Vorratsbehältertrichterenden 15 und 16 können mechanisch oder hydraulisch angetrieben werden. Es ist auch möglich, die Rührorgane 29 von den Schleuderscheibenantriebswellen 20 anzutreiben.

Die auf einer Ebene angeordneten Schleuderscheiben 18 bzw. 18' können derart angetrieben sein, daß sie auf ihren einander zugekehrten Seite in Fahrtrichtung 6 nach hinten auseinander oder auf ihren einander zugekehrten Seite in Fahrtrichtung 6 gesehen nach vorne auseinander drehend angetrieben sind.

Wie bereits vorerwähnt, sind die Dosierorgane 23 als Auslauföffnungen und die Auslauföffnungen verschließbare und einstellbare Schieber 25 mit zugeordneten einstellbaren Anschlagelementen 26 zur Bestimmung der Öffnungsweite der Auslauföffnungen ausgebildet. Die den jeweiligen Schiebern 25 und Anschlagelemente 26 und die den Einstellelementen 27 zugeordneten Einstellskalen sind seitlich des Vorratsbehälters 2 bzw. der Zulaufschächte 28 angeordnet.

Anstelle der Anschlagelemente 26 und Skalen 27 zur Bestimmung der Öffnungsweite der Auslauföffnungen können auch an den Schiebern 25 angreifende elektrische Stellelemente vorgesehen sein. Diese Stellelemente sind elektronisch ansteuerbar. Die einzelnen Schieber 25 der verschiedenen Dosierorgane 23 sind gleichzeitig oder unabhängig voneinander einstellbar.

Wie bereits eingangs erwähnt, ist der Schleuderdüngerstreuer zum Ausstreuen von zwei verschiedenen Materialsorten ausgebildet. In dem vorderen Vorratsbehälter 1 wird nach dem erfindungsgemäßen Verfahren Schneckenkorn und in den hinteren Vorratsbehälter 2 Rapssaatgut eingefüllt. Die beiden oberen Schleuderscheiben 18 schleudern die sich im hinteren Vorratsbehälter 2 befindlichen Rapskörner über den gleichen Arbeitsbreitenbereich wie die unteren Schleuderscheiben 18', die die Materialpartikel des sich in dem vorderen Vorratsbehälter 1 befindlichen Schneckenkorn abschleudern. Wie bereits erwähnt, kann die jeder Schleuderscheibe 18 bzw. 18' zugeführte Materialmenge individuell gleich oder unterschiedlich über die Dosierorgane 23 eingestellt werden.

Das den Raps verteilende Streuwerk, das aus den Schleuderscheiben 18 und den Wurfschaufeln 19 besteht, wird mit einer derartigen Geschwindigkeit angetrieben, daß aufgrund der längeren Wurfschaufeln 19 eine größere Umfangsgeschwindigkeit als das das Schneckenkorn verteilende Streuwerk, welches die Wurfschaufeln 19' auf den Schleuderscheiben 18' aufweist, erreicht wird. Wie gesagt, weisen die oberen Wurfschaufeln 19 eine größere Umlaufbahn als die unteren Wurfschaufeln 19' auf.

Die Vorerntesaat wird folgendermaßen durchgeführt. Wie vorerwähnt, wird in die Vorratsbehälter 1 und 2 das Schneckenkorn und das Rapssaatgut eingefüllt. In den stehenden Getreidebestand wird über die durch das Fahrgassensystem festgelegten Arbeitsbreiten das Rapssaatgut durch die Wurfschaufeln 19, die auf den Schleuderscheiben 18 angeordnet sind, und das Schneckenkorn von den Wurfschaufeln 19', die auf den Wurfschaufeln 18' angeordnet sind, verteilt. Durch die gleichzeitige Ausbringung von Raps und Schneckenkorn im Vorerntesaatverfahren lassen sich erhebliche Kostenvorteile erzielen. Dieses ist auch darauf zurückzuführen, daß aufgrund des Vorerntesaatverfahrens - vor dem Mähdrusch - auf eine Bodenbearbeitung und Unkrautbekämpfung verzichtet werden kann. Da der Raps zum Erntezeitpunkt (Mähdrusch) bereits aufgelaufen und entsprechend mit gewachsen ist, werden Unkraut und Ausfallgetreide aufgrund der Konkurrenzsituation unterdrückt.

## Patentansprüche

1. Verfahren zum Einsatz eines Zentrifugalstreuers mit zumindest zwei Vorratsbehältern zum Ausbringen von zumindest zwei verschiedenen Materialsorten über die gleiche Arbeitsbreite, wobei jedem Vorratsbehälter zumindest ein Dosierorgan und ein zumindest eine rotierend angetriebene Schleuderscheibe aufweisendes Streuwerk zugeordnet ist, dadurch gekennzeichnet, daß zur Durchführung der sogenannten Vorerntesaat in den einen Vorratsbehälter (2) Saatgut und in den anderen Vorratsbehälter (1) Schneckenkorn eingefüllt wird, so daß von dem einen Streuwerk (18, 19) das Saatgut und von dem anderen Streuwerk (18', 19') das Schneckenkorn verteilt wird.

2. Verfahren nach Anspruch 1, dadurch gekennzeichnet, daß das Saatgut Raps ist.

3. Verfahren nach Anspruch 1, dadurch gekennzeichnet, daß das den Raps verteilende Streuwerk (18, 19) mit einer derartigen Geschwindigkeit angetrieben wird, daß es an seinen Abwurfenden eine größere Umfangsgeschwindigkeit als das das Schneckenkorn verteilende Streuwerk (18', 19') aufweist.

4. Verfahren nach Anspruch 1, dadurch gekennzeichnet, daß der zum Einsatz kommende Schleuderstreuer Streuorgane (18, 19, 18', 19') aufweist, bei denen die Schleuderscheiben (18) des einen Streuorgans höher als die Schleuderscheiben (18') des anderen Streuorgans angeordnet sind.

5. Verfahren nach einem oder mehreren der vorstehenden Ansprüche, dadurch gekennzeichnet, daß die Schleuderscheiben (18) des oberen Streuorgans während des Betriebes eine größere Umfangsgeschwindigkeit als die Schleuderscheiben (18') des unteren Streuwerkes aufweisen.

6. Verfahren nach einem oder mehreren der vorstehenden Ansprüche, dadurch gekennzeichnet, daß die Schleuderscheiben (18, 18') der Streuwerke auswechselbar auf ihren Antriebswellen (20) angeordnet sind.

7. Verfahren nach einem oder mehreren der vorstehenden Ansprüche, dadurch gekennzeichnet, daß die den einzelnen Streuwerken (18, 18', 19, 19') zugeordneten Dosierorgane unabhängig voneinander einstellbar sind.
